# EUROPEAN PATENT APPLICATION

(11) **EP 4 682 759 A1**
(43) Date of publication of application: **21.01.2026**
(21) Application number: 24770722.7
(22) Date of filing: 07.03.2024
(51) Int. Cl.: G06N 3/004, B25J 13/00, G06F 16/90, G06N 3/008, G06N 5/04, G06N 5/022, G06Q 50/10

(54) **ACTION CONTROL SYSTEM AND PROGRAM**

(30) Priority: 13.03.2023 JP 2023039085; 22.05.2023 JP 2023084190; 01.06.2023 JP 2023091150; 26.07.2023 JP 2023122006; 10.08.2023 JP 2023131607; 03.10.2023 JP 2023172245
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/008835
(87) International publication number: WO 2024/190616

(57) **Abstract**

An action control system includes: a user state recognition unit that recognizes a user state including a behavior of a user; an emotion determination unit that determines an emotion value indicating an emotion of the user on the basis of the user state; and an action determination unit that determines an action corresponding to the behavior of the user as an action to be executed in a case where the emotion value is a positive value, and determines an action determined on the basis of a reaction rule in accordance with a behavior classification of the user as an action to be executed in a case where the emotion value is not a positive value.

## Description

### Technical Field

The present disclosure relates to an action control system and a program.

### Background Art

There is known an action control system including: an action information storage unit that stores determination information for determining an action on the basis of a state of a user; a user state recognition unit that recognizes the state of the user; an action determination unit that determines an action to be executed on the basis of the state of the user recognized by the user state recognition unit and the determination information; a reaction recognition unit that recognizes a reaction of the user to execution of the action determined by the action determination unit; a transmission unit that transmits, to an external server, the state of the user recognized by the user state recognition unit, the action determined by the action determination unit, and the reaction of the user recognized by the reaction recognition unit; a receiving unit that receives, in a case where the action determination unit fails to determine an action to be executed on the basis of the state of the user and the determination information, an action suitable for the state of the user recognized by the user state recognition unit from the server; and an action information updating unit that updates the determination information on the basis of the action received by the receiving unit from the server (see, for example, Japanese Patent No. 6053847).

### SUMMARY OF INVENTION

### Technical Problem

It is desired to cause a robot to execute an appropriate action for a user's behavior. Solution to Problem

According to a first aspect of the disclosure, an action control system is provided. The action control system includes: a user state recognition unit that recognizes a user state including a behavior of a user; an emotion determination unit that determines an emotion value indicating an emotion of the user on the basis of the user state; and an action determination unit that determines an action corresponding to the behavior of the user as an action to be executed in a case where the emotion value is a positive value, and determines an action determined on the basis of a reaction rule in accordance with a behavior classification of the user as an action to be executed in a case where the emotion value is not a positive value.

The action determination unit may determine an action corresponding to the behavior of the user as the action to be executed in a case where the emotion value is a positive value and is equal to or greater than a threshold, and may determine an action determined on the basis of a reaction rule in accordance with a behavior classification of the user as the action to be executed in a case where the emotion value is a positive value and is less than the threshold or in a case where the emotion value is a negative value.

The action control system may further include a behavior recognition unit that recognizes the behavior classification of the user on the basis of the user state, and in the reaction rule, an action for positively changing the emotion value of the user may be defined for each behavior classification.

The action corresponding to the behavior of the user may be an action that imitates the behavior of the user.

The action control system may further include an action control unit that performs control to record at least one of an image of the user and a voice of the user in a case where the emotion value is a positive value.

When performing the control, the action control unit may perform control to cause a robot provided with the action control system to approach the user.

When performing the control, the action control unit may perform at least one of control for causing a voice output device to output a voice and control for causing a light emitting device to emit light.

According to a second aspect of the disclosure, an action control system is provided. The action control system includes: an emotion determination unit that determines, on the basis of a user state, an emotion value indicating an emotion of a user; and an action determination unit that determines an action corresponding to the behavior of the user as an action to be executed in a case where the emotion value is a positive value, determines an action determined on the basis of a reaction rule in accordance with a behavior classification of the user as an action to be executed in a case where the emotion value is not a positive value and an absolute value is less than a threshold, and determines an action of notifying a supervisor of the user of a status of the user as an action to be executed in a case where the emotion value is a negative value and the absolute value is equal to or greater than the threshold.

In a case where the emotion value is a negative value and the absolute value is equal to or greater than the threshold, the action determination unit may further determine an action in which the robot rushes to a place where the user is present.

In a case where the emotion value is a negative value and the absolute value is equal to or greater than the threshold, the user state recognition unit may record the status of the user using at least one of a microphone and a camera.

The user state recognition unit may record at least one of an utterance content of the user collected by the microphone and an image of the user captured by the camera as the status of the user.

The user state recognition unit may record a result of converting the utterance content of the user collected by the microphone into character information.

According to a third aspect of the disclosure, an action control system is provided. The action control system includes: a user state recognition unit that recognizes a user state including a behavior of a user; an emotion determination unit that determines an emotion value indicating an emotion of the user on the basis of the user state and associates the emotion value with a position of the user; and an action determination unit that determines an action corresponding to the emotion value and the position of the user.

The emotion determination unit may perform emotion mapping that is processing of generating a distribution of the emotion values in a space where a plurality of the users are present, by associating positions of the plurality of users with the emotion values of the respective users.

The action determination unit may determine an action in a case where an absolute value of the emotion value is equal to or greater than a threshold.

The action control system may further include a behavior recognition unit that recognizes a behavior classification of the user on the basis of the user state, and the action determination unit may determine an action on the basis of a reaction rule that determines an action according to the behavior classification of the user.

In the reaction rule, an action for positively changing the emotion value of the user may be defined for each of the behavior classifications.

In the reaction rule, an action for solving a problem that has occurred in a space where the user is present may be defined for each of the behavior classifications.

According to a fourth aspect of the disclosure, an action control system is provided. The action control system includes: a user state recognition unit that recognizes a user state including a behavior of a user; an emotion determination unit that determines an emotion value indicating an emotion of the user on the basis of the user state; and an action determination unit that continues a first action corresponding to the behavior of the user in a case where the emotion value for the first action is a positive value, and determines a second action different from the first action in a case where the emotion value is not a positive value.

The emotion determination unit may determine the emotion value for the first action continuously or at regular intervals, and the action determination unit may switch to the second action and change an action content of the second action according to the emotion value in a case where the determined emotion value does not change or decreases.

A first robot and a second robot may be further included, in which each of the first robot and the second robot may include the user state recognition unit, the emotion determination unit, and the action determination unit, the emotion determination unit of the first robot may transmit the emotion value determined for the user to the second robot, and the action determination unit of the second robot may determine any one of the first action and the second action according to the emotion value received from the first robot.

The first robot and the second robot may be installed at different locations.

According to a fifth aspect of the disclosure, an action control system is provided. The action control system includes: a user state recognition unit that recognizes a user state including a behavior of a user; an emotion determination unit that determines an emotion value indicating an emotion of the user on the basis of the user state; an action determination unit that determines an action corresponding to the behavior of the user as an action to be executed in a case where the emotion value is a positive value, and determines an action determined on the basis of a reaction rule in accordance with a behavior classification of the user as an action to be executed in a case where the emotion value is not a positive value; and a sharing unit that shares the emotion value, in which the action determination unit determines an action on the basis of an emotion value of at least one user shared via the sharing unit among emotion values of a plurality of users in a case where there are plural users.

The action determination unit may determine an action corresponding to the behavior of the user as the action to be executed in a case where the emotion value is a positive value and is equal to or greater than a threshold, and may determine an action determined on the basis of a reaction rule in accordance with a behavior classification of the user as the action to be executed in a case where the emotion value is a positive value and is less than the threshold or in a case where the emotion value is a negative value.

The action control system may further include a behavior recognition unit that recognizes the behavior classification of the user on the basis of the user state, and in the reaction rule, an action for positively changing the emotion value of the user may be defined for each behavior classification.

The action corresponding to the behavior of the user may be an action that imitates the behavior of the user.

A program for causing a computer to function as the action control system may be provided.

The summary of the disclosure does not enumerate all the necessary features of the disclosure. A sub-combination of these feature groups may also be included in the disclosure.

### BRIEF DESCRIPTION OF DRAWINGS

Fig. 1 schematically illustrates an example of a system 5.
Fig. 2 schematically illustrates a functional configuration of a robot 100.
Fig. 3 schematically illustrates an example of an operation flow by the robot 100 according to a first embodiment.
Fig. 4 schematically illustrates an example of an operation flow by the robot 100 according to a second embodiment.
Fig. 5 schematically illustrates an example of a hardware configuration of a computer 1200.

### DESCRIPTION OF EMBODIMENTS

### [First Embodiment]

Hereinafter, the disclosure will be described through embodiments, but the following embodiments do not limit the invention according to the claims. In addition, not all combinations of features described in the embodiments are essential to the disclosed solutions.

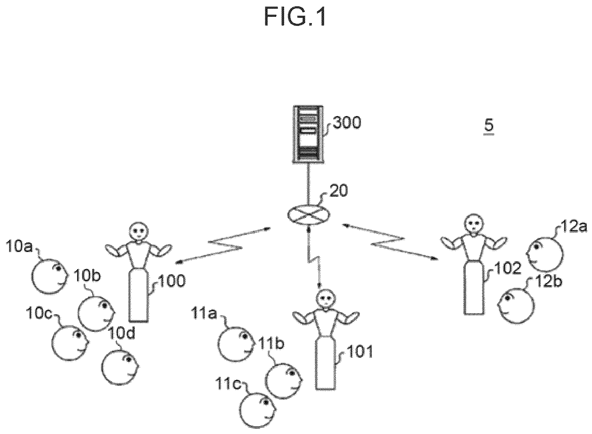

Fig. 1 schematically illustrates an example of a system 5 according to a present embodiment. The system 5 includes a robot 100, a robot 101, a robot 102, and a server 300. A user 10a, a user 10b, a user 10c, and a user 10d are users of the robot 100. A user 11a, a user 11b, and a user 11c are users of the robot 101. A user 12a and a user 12b are users of the robot 102. Note that, in the description of the present embodiment, the user 10a, the user 10b, the user 10c, and the user 10d may be collectively referred to as a user 10. Also, the user 11a, the user 11b, and the user 11c may be collectively referred to as a user 11. Furthermore, the user 12a and the user 12b may be collectively referred to as a user 12. The robot 101 and the robot 102 have substantially the same functions as those of the robot 100. Therefore, the system 5 will be described focusing on the function of the robot 100.

The robot 100 engages in a conversation with the user 10 and provides a video to the user 10. At this time, the robot 100 engages in a conversation with the user 10 and provides a video and the like to the user 10, in cooperation with the server 300 and the like that can communicate via a communication network 20. For example, the robot 100 not only learns an appropriate conversation by itself, but also performs learning so that a conversation can be advanced more appropriately with the user 10 in cooperation with the server 300. Furthermore, the robot 100 causes the server 300 to record the captured video data and the like of the user 10, requests the server 300 to transmit the video data and the like as necessary, and provides the video data and the like to the user 10.

Furthermore, the robot 100 has an emotion value indicating the type of its own emotion. For example, the robot 100 has emotion values indicating the strength of each emotion of "joy", "anger", "sorrow", "cheerful", "pleasant", "unpleasant", "relief", "anxious", "sad", "excitement", "worried", "relieved", "sense of fulfillment", "sense of emptiness", and "neutral". For example, when the robot 100 engages in a conversation with the user 10 in a state where the emotion value of excitement is large, the robot emits a voice at a fast speed. As described above, the robot 100 can express its own emotion by action.

Furthermore, the robot 100 has a function of recognizing a behavior of the user 10. The robot 100 recognizes the behavior of the user 10 by analyzing a face image of the user 10 acquired by a camera function and a voice of the user 10 acquired by a microphone function. The robot 100 determines an action to be executed by the robot 100 on the basis of the recognized behavior of the user 10 or the like.

The robot 100 stores a rule defining an action to be executed by the robot 100 on the basis of the behavior of the user 10, and performs various actions according to the rule.

Specifically, the robot 100 has a reaction rule for determining an action of the robot 100 on the basis of the behavior of the user 10. In the reaction rule, for example, an action of "laughing" is defined as the action of the robot 100, with respect to a case where the behavior of the user 10 is "laughing". Furthermore, in the reaction rule, an action of "apologize" is defined as the action of the robot 100, with respect to a case where the behavior of the user 10 is "angry". Furthermore, in the reaction rule, an action of "answering" is defined as the action of the robot 100 with respect to a case where the behavior of the user 10 is "ask". In the reaction rule, an action of "calling out" is defined as the action of the robot 100 with respect to a case where the behavior of the user 10 is "sad".

In a case where the robot 100 recognizes that the behavior of the user 10 is "angry" on the basis of the reaction rule, the robot 100 selects an action of "apologize" defined in the reaction rule as the action to be executed by the robot 100. For example, when selecting the action of "apologize", the robot 100 performs an action of "apologize" and outputs a voice expressing a word of "apologize".

Furthermore, the robot 100 transmits, to the server 300, user reaction information indicating that a positive reaction has been obtained from the user 10 by this action. The user reaction information includes, for example, a user behavior of "angry", an action of the robot 100 of "apologize", a positive reaction of the user 10, and an attribute of the user 10.

The server 300 stores the user reaction information received from the robot 100. Note that the server 300 receives and stores the user reaction information not only from the robot 100 but also from each of the robot 101 and the robot 102. Then, the server 300 analyzes the user reaction information from the robot 100, the robot 101, and the robot 102, and updates the reaction rule.

The robot 100 receives the updated reaction rule from the server 300 by inquiring the server 300 about the updated reaction rule. The robot 100 incorporates the updated reaction rule into the reaction rule stored in the robot 100. As a result, the robot 100 can incorporate the reaction rule acquired by the robot 101, the robot 102, or the like into its own reaction rule.

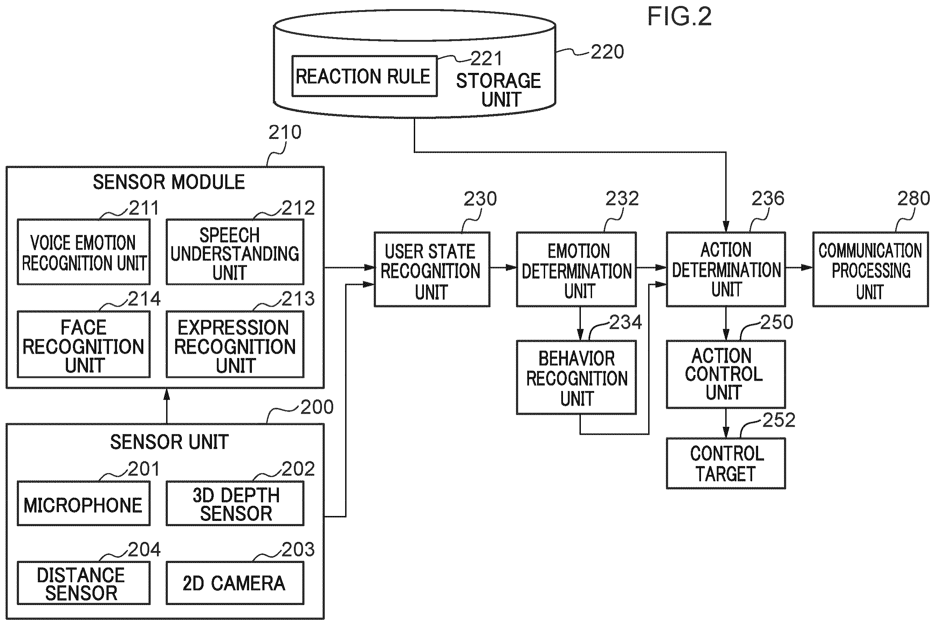

Fig. 2 schematically illustrates a functional configuration of the robot 100. The robot 100 includes a sensor unit 200, a sensor module unit 210, a storage unit 220, a user state recognition unit 230, an emotion determination unit 232, a behavior recognition unit 234, an action determination unit 236, an action control unit 250, a control target 252, and a communication processing unit 280.

The control target 252 includes a display device, a speaker, an LED of an eye portion, a motor that drives parts such as an arm, a hand, or a foot, and the like. The posture and gesture of the robot 100 are controlled by controlling motors for arms, hands, feet, and the like. Some of the emotions of the robot 100 can be expressed by controlling these motors. Furthermore, the expression of the robot 100 can be expressed by controlling the light emission state of the LED of the eye portion of the robot 100. Note that the posture, gesture, and expression of the robot 100 are examples of the attitude of the robot 100.

The sensor unit 200 includes a microphone 201, a 3D depth sensor 202, a 2D camera 203, and a distance sensor 204. The microphone 201 continuously detects a voice and outputs voice data. Note that the microphone 201 may be provided on the head of the robot 100 and may have a function of performing binaural recording. The 3D depth sensor 202 detects an outline of an object by continuously irradiating the infrared pattern and analyzing the infrared pattern from the infrared image continuously captured by the infrared camera. The 2D camera 203 is an example of an image sensor. The 2D camera 203 captures an image with visible light and generates image information of visible light. The distance sensor detects a distance to the object by emitting, for example, a laser, an ultrasonic wave, or the like. Note that the sensor unit 200 may further include a clock, a gyro sensor, a touch sensor, a sensor for motor feedback, and the like.

Note that, among the components of the robot 100 illustrated in Fig. 2, the components other than the control target 252 and the sensor unit 200 are examples of the components included in the action control system included in the robot 100. The action control system of the robot 100 controls the control target 252.

The storage unit 220 includes a reaction rule 221. At least a part of the storage unit 220 is implemented by a storage medium such as a memory. The storage unit may include a person DB that stores a face image of the user 10, attribute information of the user 10, and the like. Note that, among the components of the robot 100 illustrated in Fig. 2, the functions of the components other than the control target 252, the sensor unit 200, and the storage unit 220 can be realized by the CPU operating on the basis of a program. For example, the functions of these components can be implemented as the operation of the CPU by basic software (OS) and a program operating on the OS.

The sensor module unit 210 includes a voice emotion recognition unit 211, an utterance understanding unit 212, an expression recognition unit 213, and a face recognition unit 214. Information detected by the sensor unit 200 is input to the sensor module unit 210. The sensor module unit 210 analyzes information detected by the sensor unit 200 and outputs an analysis result to the user state recognition unit 230.

The voice emotion recognition unit 211 of the sensor module unit 210 analyzes the voice of the user 10 detected by the microphone 201 to recognize the emotion of the user 10. For example, the voice emotion recognition unit 211 extracts a feature amount such as a frequency component of speech and recognizes the emotion of the user 10 on the basis of the extracted feature amount. The utterance understanding unit 212 analyzes the voice of the user 10 detected by the microphone 201 and outputs character information indicating the utterance content of the user 10.

The expression recognition unit 213 recognizes the expression of the user 10 and the emotion of the user 10 from the image of the user 10 captured by the 2D camera 203. For example, the expression recognition unit 213 recognizes the expression and emotion of the user 10 on the basis of the shapes, positional relationships, and the like of the eyes and the mouth.

The face recognition unit 214 recognizes the face of the user 10. The face recognition unit 214 recognizes the user 10 by matching the face image stored in the person DB with the face image of the user 10 captured by the 2D camera 203.

The user state recognition unit 230 recognizes the state of the user 10 on the basis of the information analyzed by the sensor module unit 210. For example, processing mainly related to perception is performed using the analysis result of the sensor module unit 210. For example, perception information such as "Dad is alone." and "The probability that dad is not smiling is 90%." is generated. Processing of understanding the meaning of the generated perception information is performed. For example, semantic information such as "Dad is alone and looks sad." is generated. In addition, the user state recognition unit 230 stores the information detected by the sensor unit 200 in the storage unit 200 and analyzes the information detected by the sensor unit 200.

The emotion determination unit 232 determines an emotion value indicating the emotion of the user 10 on the basis of the information analyzed by the sensor module unit 210 and the state of the user 10 recognized by the user state recognition unit 230. For example, the information analyzed by the sensor module unit 210 and the recognized state of the user 10 are input to a neural network trained in advance, and an emotion value indicating the emotion of the user 10 is acquired.

Here, the emotion value indicating the emotion of the user 10 is a value indicating whether the emotion of the user is positive or negative. For example, in a case where the emotion of the user is a bright emotion accompanied with pleasure or comfort, such as "joy", "cheerful", "pleasant", "relieved", "excitement", "relief", and "sense of fulfillment", a positive value is indicated, and the value becomes larger as the emotion is brighter. If the user's emotion is an emotion that makes the user feel unpleasant, such as "angry", "sorrow", "unpleasant", "anxious", "sad", "worried", and "sense of emptiness", the negative value is indicated, and the absolute value of the negative value increases as the user feels unpleasant. In a case where the user's emotion is not any of the above ("neutral"), a value of 0 is indicated.

The behavior recognition unit 234 recognizes a behavior of the user 10 on the basis of the information analyzed by the sensor module unit 210 and the state of the user 10 recognized by the user state recognition unit 230. For example, the information analyzed by the sensor module unit 210 and the recognized state of the user 10 are input to a neural network trained in advance, probabilities of a plurality of predetermined behavior classifications (for example, "laughing", "angry", "ask", and "sad") are acquired, and the behavior classification having the highest probability is recognized as the behavior of the user 10.

In a case where the emotion value of the user 10 determined by the emotion determination unit 232 is a positive value, the action determination unit 236 determines an action that imitates the behavior of the user 10 as the action to be executed.

When the emotion value of the user 10 determined by the emotion determination unit 232 is not a positive value, that is, when the emotion value of the user 10 is a negative value or 0, the action determination unit 236 determines the action of the robot 100 on the basis of the user's behavior recognized by the behavior recognition unit 234 and the reaction rule 221. At this time, in the reaction rule 221, an action for positively changing the emotion value of the user 10 is determined with respect to the user behavior corresponding to the negative emotion. In detail, in the reaction rule 221, an action of "apologize" is defined as the action of the robot 100 with respect to a case where the behavior of the user 10 is "angry". Furthermore, in the reaction rule 221, an action of "calling out" is defined as the action of the robot 100 with respect to a case where the behavior of the user 10 is "sad". Furthermore, a user behavior corresponding to an emotion value of 0, for example, an action of "answering" with respect to "ask" is defined as the action of the robot 100.

The action control unit 250 controls the control target 252 on the basis of the action determined by the action determination unit 236. For example, when the action determination unit 236 determines an action including utterance, the action control unit 250 causes the speaker included in the control target 252 to output a voice. At this time, the action control unit 250 may determine the utterance speed of the voice on the basis of the emotion value of the robot 100.

Furthermore, in a case where the action determination unit 236 determines an action that imitates the behavior of the user 10, the action control unit 250 outputs a voice corresponding to the voice of the user 10 from the speaker, expresses the expression corresponding to the expression of the user 10 by the light emission state of the LED of the eye portion of the robot 100, and expresses the posture and gesture of the robot 100 corresponding to the motion of the user 10 by driving the motor for the arm, the hand, the foot, and the like. As a result, in a case where the behavior of the user 10 is "laughing", the robot 100 can "laugh" together by imitating the behavior of the user 10.

The action control unit 250 may recognize a change in emotion of the user 10 with respect to execution of the action determined by the action determination unit 236. For example, the change in emotion may be recognized on the basis of the voice or expression of the user 10. In addition, the change in emotion of the user 10 may be recognized on the basis of detection of an impact by the touch sensor included in the sensor unit 200. In a case where an impact is detected by the touch sensor included in the sensor unit 200, it may be recognized that the emotion of the user 10 has become worse, or in a case where it is determined that the reaction of the user 10 is laughing or pleased from the detection result of the touch sensor included in the sensor unit 200, it may be recognized that the emotion of the user 10 has become better. Information indicating the reaction of the user 10 is output to the communication processing unit 280.

The communication processing unit 280 is responsible for communication with the server 300. As described above, the communication processing unit 280 transmits the user reaction information to the server 300. Furthermore, the communication processing unit 280 receives the updated reaction rule from the server 300. When the communication processing unit 280 receives the updated reaction rule from the server 300, the communication processing unit 280 updates the reaction rule 221.

The server 300 performs communication between the robot 100, the robot 101, and the robot 102 and the server 300, receives the user reaction information transmitted from the robot 100, and updates the reaction rule on the basis of the reaction rule including the action for which a positive reaction has been obtained.

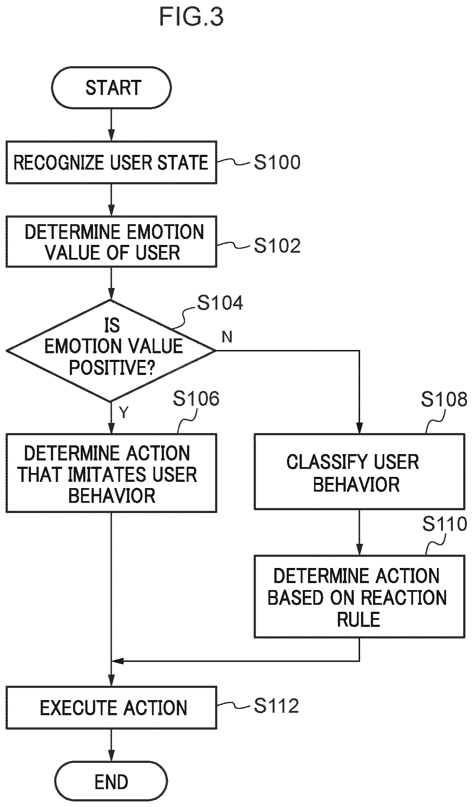

Fig. 3 schematically illustrates an example of an operation flow related to an operation of determining an action in the robot 100. The operation flow illustrated in Fig. 3 is repeatedly executed. At this time, it is assumed that information analyzed by the sensor module unit 210 is input. Note that "S" in the operation flow represents a step to be executed.

First, in step S100, the user state recognition unit 230 recognizes the state of the user 10 on the basis of the information analyzed by the sensor module unit 210.

In step S102, the emotion determination unit 232 determines an emotion value indicating the emotion of the user 10 on the basis of the information analyzed by the sensor module unit 210 and the state of the user 10 recognized by the user state recognition unit 230.

In step S104, it is determined whether or not the emotion value of the user 10 determined in step S102 is a positive value. In a case where the emotion value of the user 10 determined in step S102 is a positive value, the process proceeds to step S106. On the other hand, in a case where the emotion value of the user 10 determined in step S102 is a negative value or 0, the process proceeds to step S108.

In step S106, the action determination unit 236 determines an action that imitates the behavior of the user 10 as the action to be executed.

In step S108, the behavior recognition unit 234 recognizes the behavior classification of the user 10 on the basis of the information analyzed by the sensor module unit 210 and the state of the user 10 recognized by the user state recognition unit 230.

In step S110, the action determination unit 236 determines an action of the robot 100 on the basis of the user's behavior recognized by the behavior recognition unit 234 and the reaction rule 221.

In step S112, the action control unit 250 controls the control target 252 on the basis of the action determined by the action determination unit 236.

As described above, according to the robot 100 of the first embodiment, it is possible to cause the robot 100 to execute an appropriate action with respect to the behavior of the user 10. Conventionally, a behavior of a user is classified to determine an action including an expression or an appearance of a robot. On the other hand, the robot 100 determines the emotion value of the user 10, and imitates the behavior of the user 10 if the emotion is positive. If the behavior of the user 10 that is a positive emotion is imitated, the user 10 is not uncomfortable, and it is possible to avoid a problem due to an error in the behavior recognition of the user 10 by the robot 10. Furthermore, in a case where the emotion of the user 10 is a negative emotion, the neural network recognizes the behavior classification of the user 10 and executes an action for the user 10 on the basis of the reaction rule. As a result, for example, the robot 100 can execute an action such as calling out to encourage the user 10 to have a positive emotion if the user is sad. Furthermore, in a case where the emotion value of the user 10 is 0, the neural network can recognize the behavior classification of the user and execute an appropriate action for the behavior of the user 10 on the basis of the reaction rule.

Note that, in a case where the emotion value is a positive value and is equal to or greater than a threshold, the action determination unit 236 may determine an action that imitates the user's behavior as the action to be executed. Furthermore, in a case where the emotion value is a positive value and is less than the threshold, or in a case where the emotion value is a negative value, the action determination unit 236 may determine an action determined on the basis of the reaction rule in accordance with the behavior classification of the user as the action to be executed. As a result, in a case where the positive emotion is strong, the robot 100 executes an action that imitates the behavior of the user 10, and in other cases, the action of the robot 100 can be determined and executed on the basis of the reaction rule 221.

### (First Modification)

Furthermore, in the above-described embodiment, in a case where the emotion value of the user 10 determined by the emotion determination unit 232 is a positive value, the action control unit 250 may perform control to record at least one of the image of the user 10 and the voice of the user 10. In a case of performing control to record the image of the user 10, the action control unit 250 performs control to cause the 2D camera 203 to capture the image of the user 10, and performs control to store the image of the user 10 obtained by the capturing in the storage unit 220 as event data. The image in this case may be a still image or a moving image. Furthermore, in a case of performing control to record the voice of the user 10, the action control unit 250 performs control to acquire the voice of the user 10 by the microphone 201 and store the acquired voice in the storage unit 220 as event data. With these controls, it is possible to record a moment at which the user feels pleasant, such as pleasant memories of a birthday party, without missing.

Furthermore, in a case where the distance between the robot 100 and the user 10 is a certain value or more at the time of performing the above-described recording control, the action control unit 250 may perform control to cause the robot 100 to approach the user 10 such that the distance between the robot 100 and the user 10 is less than the certain value. Furthermore, the action control unit 250 may attract the attention of the user 10 by performing at least one of control to cause a voice output device such as a speaker to output a voice and control to cause a light emitting device such as an LED of an eye portion to emit light when performing the above-described recording control. With these controls, it is possible to record an image that firmly captures the expression of the user 10.

Furthermore, the timing at which the action control unit 250 performs the control to record is not particularly limited. For example, the action control unit 250 may monitor the emotion value of the user 10 at preset time intervals, and perform the above-described recording control at the timing of detecting that the emotion value of the user 10 is a positive value.

Note that the robot 100 is an example of an electronic device including an action control system. The application target of the action control system is not limited to the robot 100, and the action control system can be applied to various electronic devices. Furthermore, the function of the server 300 may be implemented by one or more computers. At least some functions of the server 300 may be implemented by a virtual machine. Furthermore, at least a part of the functions of the server 300 may be implemented in a cloud.

### (Second Modification)

Furthermore, in the above embodiment, an example in which the robot 100 determines the emotion value of the user 10 has been described, but this is merely an example. The robot 100 may determine emotion values of a plurality of users 10 who are present in a certain space.

In this case, for example, the robots 100, 101, and 102 collect the emotion values of the user 10 while moving in space. For example, the robots 100, 101, and 102 tour a party venue along a predetermined route, and acquire emotion values of a plurality of users 10 in the party venue. In other words, the emotion values in the space are mapped (that is, emotion mapping) on the basis of the emotion values of the plurality of users 10 collected by the robots 100, 101, and 102.

Furthermore, for example, instead of or in addition to collecting the emotion values of the user 10 as the robots 100, 101, and 102 move, the emotion values of the user 10 who is present in the space may be collected on the basis of the state in the space obtained by a fixed camera.

The robots 100, 101, and 102 can be the same height as a person. Then, in the robots 100, 101, and 102, the 2D camera 203 can be mounted on the heads of the robots 100, 101, and 102. In this case, the robots 100, 101, and 102 can easily capture the expression of the user 10 with the 2D camera 203. For example, the 2D camera 203 mounted on the robots 100, 101, and 102 can more accurately capture the expression of the user 10 than the fixed camera installed near the ceiling of the space.

The space is not particularly limited as long as it is a space where a plurality of users 10 gather. For example, in addition to the party venue, an event venue, a concert venue, or the like may be used. Furthermore, the other space may be a commercial facility such as a supermarket, a department store, or a shopping mall, a movie theater, a museum, a hotel, a station, a school, a park, or the like.

In the following description, in a case where the robots 100, 101, and 102 are not particularly distinguished, the robot 100 will be described as a representative example. The number of robots 100 may be 2 or less, or 4 or more.

Specifically, the user state recognition unit 230 recognizes the states of the plurality of users 10 on the basis of the information analyzed by the sensor module unit 210. For example, perception information such as "there are a plurality of smiling persons" and "there is a crying child" is generated. Processing of understanding the meaning of the generated perception information is performed. For example, semantic information such as "cheerful atmosphere" and "child is in trouble" is generated.

The emotion determination unit 232 determines an emotion value indicating the emotion of the user 10 on the basis of the information analyzed by the sensor module unit 210 and the states of the plurality of users 10 recognized by the user state recognition unit 230. For example, the information analyzed by the sensor module unit 210 and the recognized state of the user 10 are input to a neural network trained in advance, and an emotion value indicating the emotion of the user 10 is acquired.

Then, the emotion determination unit 232 associates the determined emotion value with the place where the user 10 who has indicated the emotion value is present. The place where the user 10 is present is obtained by, for example, position information (for example, three-dimensional coordinates in the space, and the like) of the robot 100 when the robot 100 collects the emotion values of the user 10. In other words, the emotion determination unit 232 executes the emotion mapping described above.

Here, the emotion mapping is processing of generating a distribution of emotion values in a space where a plurality of users 10 are present by associating positions of the plurality of users 10 with emotion values of the plurality of users 10. Specifically, the emotion determination unit 232 uses the result of associating the position information of the plurality of users 10 with the emotion value of each of the plurality of users 10, and stores the emotion value in each coordinate of the map indicating the space (for example, a two-dimensional map). As a result, the distribution of the emotion values in the space where the plurality of users 10 are present is obtained.

Furthermore, in the emotion mapping, the emotion value may be stored not only for the position where the user 10 is present but also for the periphery thereof. For example, the emotion value may be stored in a predetermined range (for example, within a radius of 1 m) from the position where the user 10 is present. As a result, the influence of the emotion of the user 10 on the periphery of the user 10 is reflected in the emotion mapping. Furthermore, in a case where the user 10 is moving, the emotion value may be mapped according to the movement trajectory.

The behavior recognition unit 234 recognizes a behavior of the user 10 on the basis of the information analyzed by the sensor module unit 210 and the state of the user 10 recognized by the user state recognition unit 230. For example, the information analyzed by the sensor module unit 210 and the recognized state of the user 10 are input to a neural network trained in advance, probabilities of a plurality of predetermined behavior classifications (for example, "laughing", "angry", "ask", and "sad") are acquired, and the behavior classification having the highest probability is recognized as the behavior of the user 10.

Furthermore, the behavior recognition unit 234 associates the recognized behavior of the user 10 with the place where the user 10 who has performed the recognized action is present. In this case, similarly to the emotion mapping, the mapping may be performed on the behavior of the user 10.

The action determination unit 236 determines an action of the robot 100 according to the emotion value of the user 10 determined by the emotion determination unit 232 and/or the behavior of the user 10 recognized by the behavior recognition unit 234.

The action determination unit 236 determines the action of the robot 100 on the basis of the emotion value of the user 10 determined by the emotion determination unit 232 and the position of the user 10 associated with the emotion value. Specifically, the action determination unit 236 determines an action corresponding to the emotion value and the position of the user 10 using the distribution of the emotion values obtained by the emotion mapping. For example, in a case where there are a plurality of users 10 indicating positive emotion values, an action is determined in which the robot 100 moves to the place and images the plurality of users 10 with the 2D camera 203. As a result, it is possible to record that the plurality of users 10 have shared the pleasant time. On the other hand, for example, in a case where a negative emotion value is detected, an action of moving to the vicinity of the user 10 and "calling out" is determined.

Furthermore, the action determination unit 236 determines an action according to the behavior of the user 10 using the reaction rule 221 in addition to the emotion value and the position of the user 10. At this time, in the reaction rule 221, an action of making the emotion value of the user 10 more positive with respect to the positive emotion is determined. For example, in the reaction rule 221, in a case where there are a plurality of users 10 who indicate "laughing" as a behavior, an action of the robot 100 moving to the place and "laughing together" is defined.

On the other hand, an action for positively changing the emotion value of the user 19 is determined for the user behavior corresponding to the negative emotion. Specifically, in the reaction rule 221, an action of moving to the vicinity of the user 10 and "telling a joke" is defined as the action of the robot 100 with respect to a case where the behavior of the user 10 is "sad". In addition, an action in which the robot 100 moves to the place where the user 10 is and confirms the content in which the problem has occurred with respect to the user behavior corresponding to the negative emotion is defined as the action of the robot 100.

Furthermore, in the reaction rule 221, an action to be taken by the robot 100 with respect to the occurrence of a problem in the space is defined. For example, for a problem of "a child has gone missing" in a space, an action of "looking for a lost child and bringing the lost child to a guardian" is defined. Here, the occurrence of the problem is estimated on the basis of the emotion value (for example, "sad" and "anxious") of the user 10 and/or the behavior (for example, utterance such as "My son is missing!" to the robot 100) of the user 10. Furthermore, the search for a lost child is performed, for example, by collecting information regarding the lost child using the fixed camera provided in the space and/or the 2D camera 203 and/or the microphone 201 mounted on the robot 100, and searching for the current position of the lost child.

The action control unit 250 controls the control target 252 on the basis of the action determined by the action determination unit 236. For example, when the action determination unit 236 determines an action including utterance, the action control unit 250 causes the speaker included in the control target 252 to output a voice. At this time, the action control unit 250 may determine the utterance speed of the voice on the basis of the emotion value of the robot 100.

As described above, according to the robot 100, the emotion value of the user 10 is determined, and the position of the user 10 and the emotion value of the user 10 are further associated with each other. Then, an action corresponding to the emotion value of the user 10 and the position of the user 10 is determined. As a result, for example, the robot can move to a location where the emotion value has been detected and perform an action according to the emotion value. As a result, it is realized that an appropriate action according to not only the emotion value of the user 10 but also the position is determined.

Furthermore, according to the robot 100, emotion mapping is performed by associating positions of a plurality of users 10 with emotion values. This makes it easy to grasp the distribution of emotion values in the space. It is possible to grasp not only the position where the user 10 is present but also the emotion values distributed around the position.

Furthermore, according to the robot 100, the behavior of the user 10 is recognized, and an action according to the behavior classification of the user 10 is determined using the reaction rule 221. As a result, execution of an appropriate action according to the behavior of the user 10 is realized.

Furthermore, according to the robot 100, if the emotion of the user 10 is a negative emotion, an action is executed for the user 10 on the basis of the reaction rule 221. As a result, for example, the robot 100 can execute an action such as "calling out" or "telling a joke" so that the user 10 can feel energized and brought into positive emotion if he/she is sad.

Furthermore, according to the robot 100, in order to solve the problem occurring in the space, an action is executed for the user 10 on the basis of the reaction rule 221. As a result, for example, when the user 10 is looking for a lost child, the robot 100 can execute an action of searching for and bringing the lost child together.

Note that the action determination unit 236 may determine an action in a case where the absolute value of the emotion value is equal to or greater than a threshold. As a result, in a case where the emotion value is large, the robot 100 executes the behavior of the user 10, and it is possible to cope with a situation where an extreme emotion value occurs.

### (Third Modification)

Note that, in the present embodiment, an action to be taken by the robot 100 may be determined according to whether or not the user 10 has a positive emotion.

Specifically, the user state recognition unit 230 recognizes a user state including a behavior of the user 10.

The emotion determination unit 232 determines an emotion value indicating the emotion of the user 10 on the basis of the user state recognized by the user state recognition unit 230.

The action determination unit 236 continues a first action of the robot 100 corresponding to the behavior of the user 10 in a case where the emotion value of the user 10 with respect to the first action determined by the emotion determination unit 232 is a positive value, and determines a second action different from the first action when the emotion value is not a positive value, that is, when the emotion value is a negative value or 0. Here, as described above, in a case where the emotion value of the user 10 determined by the emotion determination unit 232 is a positive value, the action determination unit 236 may determine an action that imitates the behavior of the user 10 as the action to be executed. When the emotion value of the user 10 determined by the emotion determination unit 232 is not a positive value, the action determination unit 236 may determine the second action of the robot 100 on the basis of the user's behavior recognized by the behavior recognition unit 234 and the reaction rule 221. At this time, in the reaction rule 221, an action for positively changing the emotion value of the user 10 is determined with respect to the user behavior corresponding to the negative emotion.

That is, whether or not the user 10 is satisfied with the first action (primary response) of the robot 100 is determined by the emotion value, and another second action (secondary response) is performed when the user is not satisfied. While the user 10 and the robot 100 are engaged in a conversation, the robot 100 performs a secondary response according to the emotion value of the user 10. When the user 10 is satisfied with the action of the robot 100, the emotion value of the user 10 indicates a positive value. On the other hand, in a case of dissatisfaction, the emotion value of the user 10 indicates a negative value or 0. If the user 10 is not satisfied with the first action (primary response) of the robot 100, the robot 100 performs the secondary response such as taking another second action.

Furthermore, the emotion determination unit 232 may determine an emotion value of the user 10 for the first action of the robot 100 continuously or at regular intervals. In this case, in a case where the determined emotion value does not change or decreases, the action determination unit 236 switches to the second action and changes the action content of the second action according to the emotion value.

That is, even during the primary response by the robot 100, the emotion value of the user 10 may be constantly or periodically measured to change the action of the robot 100. As a result, an erroneous action of the robot 100 can be corrected. Furthermore, it is possible to cope with the swing motion of the emotion of the user 10. For example, it is assumed that the robot 100 gives words of encouragement to the user 10 who is sad as the first action, but the emotion value of the user 10 does not change or decreases. In this case, as the second action, the robot 100 performs the next action such as giving other words of encouragement or stern words.

Furthermore, the emotion value of the user 100 may be transferred from the robot 100 that responded first, and the subsequent robot 101 (or robot 102) may perform an appropriate response. In this example, the robot 100 is an example of a first robot, and the robot 101 (or robot 102) is an example of a second robot.

For example, each of the robot 100 and the robot 101 includes a user state recognition unit 230, an emotion determination unit 232, and an action determination unit 236. The emotion determination unit 232 of the robot 100 transmits the emotion value determined for the user 10 to the robot 101. The action determination unit 236 of the robot 101 determines one of the first action and the second action according to the emotion value received from the robot 100. That is, the robot 101 determines the first action for the user 10 when the emotion value received from the robot 100 is a positive value, and determines the second action different from the first action when the emotion value is not a positive value, that is, when the emotion value is a negative value or 0.

Furthermore, the robot 100 and the robot 101 may be installed at different locations. For example, it is assumed that the robot 100 is a reception robot in a reception area and the robot 101 is a customer service robot in a customer service area. The robot 100, which is a reception robot, acquires the emotion value of the user 10, and transfers the acquired emotion value to the robot 101, which is the subsequent customer service robot. In this case, the robot 100 as a reception robot performs a primary response, and the robot 101 as a customer service robot performs a secondary response.

### (Fourth Modification)

The robot 100 can be used as a robot for serving customers in commercial facilities, restaurants, and the like, for example. In this case, a plurality of robots 100 may be arranged in one space. In this case, the robot 100 may include a sharing unit in addition to the components described above with reference to Fig. 2. Since a plurality of persons use a commercial facility or the like, positive and negative emotions of the plurality of persons are mixed. The robot 100 including the sharing unit can share the emotion values of the plurality of persons among the plurality of robots 100 via the sharing unit. As an example, in a case where there are an angry user, a noisy user, or the like while at least one robot 100 is serving a plurality of users who use a commercial facility or the like, the robot 100 can transfer, in other words, share the acquired emotion value of the user to another robot 100. As a result, the action determination unit 236 of another robot 100 that is not the robot 100 that has directly acquired the emotion value of the user or the like determines an action based on the shared emotion value of the user. The other robot 100 to which the user's emotion value is shared can respond to the user having a negative emotion value such as getting angry or making noise based on the emotion value.

### [Second Embodiment]

In the first embodiment, in a case where the emotion value of the user 10 is a negative value, the robot 100 executes an action determined on the basis of the reaction rule on the user 10, and makes a response such as bringing the emotion of the user 10 to a positive emotion, for example. However, in a case where the emotion value of the user 10 is a negative value and the magnitude of the negative value, that is, the absolute value of the negative value is too large, it is also assumed that the emotion of the user 10 becomes unstable and the user 10 takes an unexpected action. In this case, the robot 100 preferably notifies a supervisor of the user 10 such as a parent, a teacher of a school, or a supervisor of a workplace that the user 10 has a strong negative emotion.

In the second embodiment, the operation of the robot 100 that notifies the supervisor of the user 10 of the state of the user 10 when the absolute value of the negative value in the emotion value of the user 10 is equal to or greater than a predetermined threshold will be described.

Note that the configuration of the system 5 and the functional configuration of the robot 100 in the second embodiment are the same as the configurations illustrated in Figs. 1 and 2, respectively.

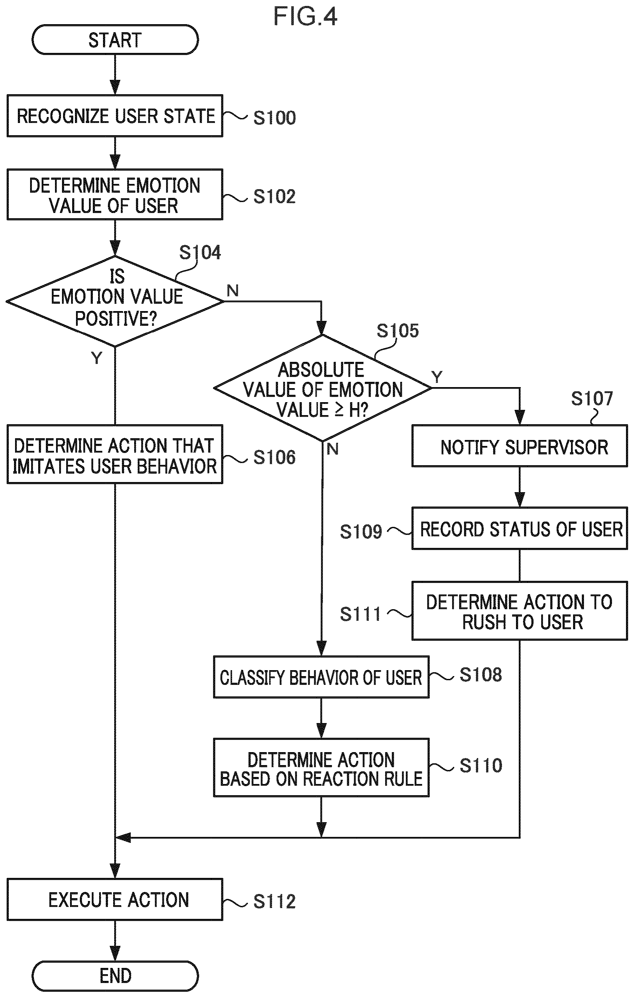

Fig. 4 schematically illustrates an example of an operation flow related to an operation of determining an action in the robot 100 according to the second embodiment. The operation flow illustrated in Fig. 4 is repeatedly executed. At this time, it is assumed that information analyzed by the sensor module unit 210 is input.

The operation flow illustrated in Fig. 4 is different from the operation flow according to the first embodiment illustrated in Fig. 3 in that step S105, step S107, step S109, and step S111 are added, and the other processing is the same as the operation flow illustrated in Fig. 3. Therefore, hereinafter, the operation flow illustrated in Fig. 4 will be described focusing on points different from the operation flow illustrated in Fig. 3.

In step S104 of the operation flow of Fig. 4, in a case where the emotion value of the user 10 determined in step S102 is a negative value or 0, the process proceeds to step S105.

In step S105, it is determined whether or not the absolute value of the emotion value of the user 10 is equal to or greater than a predetermined threshold H. The threshold H is a value determined in advance as a value that requires attention to the status of the user 10 if the emotion value of the user 10 is equal to or greater than this value. The threshold H can be changed, and is stored in advance in the storage unit 220, for example. When the absolute value of the emotion value of the user 10 is less than the threshold H, the process proceeds to step S108, and the processes after step S108 described in the first embodiment are executed.

That is, when the absolute value of the emotion value of the user 10 is less than the threshold H, the control target 252 is controlled on the basis of the behavior of the user 10 recognized by the behavior recognition unit 234 and the action of the robot 100 determined on the basis of the reaction rule 221.

On the other hand, in a case where the absolute value of the emotion value of the user 10 is the threshold H or more, the process proceeds to step S107.

In step S107, the action determination unit 236 determines an action for notifying the supervisor of the user 10 that the emotion value of the user 10 is a negative value and an extreme negative emotion value whose absolute value is equal to or greater than the threshold H is recognized.

In step S109, the user state recognition unit 230 starts acquisition of at least one of the image of the user 10 by the 2D camera 203 and the utterance content of the user 10 by the microphone 201, and records the status of the user 10. "Recording" means storing acquired information so that the acquired information can be obtained later. Specifically, the user state recognition unit 230 stores the acquired status of the user 10 in the storage unit 220.

Note that, since the body temperature may decrease due to negative emotions and symptoms such as lightheadedness may occur in the user 10, the user state recognition unit 230 may acquire and record the body temperature of the user 10 from the 3D depth sensor 202.

Furthermore, the user state recognition unit 230 may record a result of converting the utterance content of the user 10 collected through the microphone 201 into character information.

In a state where the status of the user 10 is continuously recorded, in step S111, the action determination unit 236 determines an action of rushing to a place where the user 10 is, as an action to be executed. The place where the user 10 is refers to, for example, a range in which the robot 100 can contact the user.

Therefore, in step S112, the action control unit 250 refers to the mail address of the supervisor for each user 10 stored in advance in the storage unit 220, and transmits information to the mail address of the supervisor of the user 10 for which an extreme negative emotion value is recognized. That is, the robot 100 notifies the information device such as the smartphone possessed by the supervisor of the user 10 of the status of the user 10. Furthermore, the action control unit 250 controls the control target 252 so that the robot 100 moves to a place where the user 10 is present.

As described above, according to the robot 100 according to the second embodiment, in a case where the emotion value of the user 10 is a negative emotion value having an absolute value equal to or greater than the threshold H, the supervisor of the user 10 is notified that an extreme negative emotion value is recognized for the user 10. As a result, the supervisor of the user 10 can care for the user 10 whose emotion is unstable.

Furthermore, since the robot 100 rushes to the place where the user 10 is and records the status of the user 10, it is possible to check the detailed status of the user 10 later as compared with a case where the robot is at a place away from the user 10.

By checking the recorded status of the user 10, the robot 100 can take a response according to the status of the user 10. For example, in a case where the user 10 is engaged in an argument, the robot 100 may check the situation of the argument and the surrounding situation and then identify the cause of the argument later. In some cases, the robot 100 may arbitrate the argument based on the recorded status of the user 10.

Furthermore, the robot 100 notifies the supervisor of the user 10 of the status of the user 10 in a case where an extreme negative emotion value is recognized in step S107 of Fig. 4, but may notify the supervisor of the user 10 of the status of the user 10 in a case where a child who is the user 10 comes home crying.

As described above, the robot 100 may determine the action of the robot 100 on the basis of the behavior of the user 10 confirmed from the record.

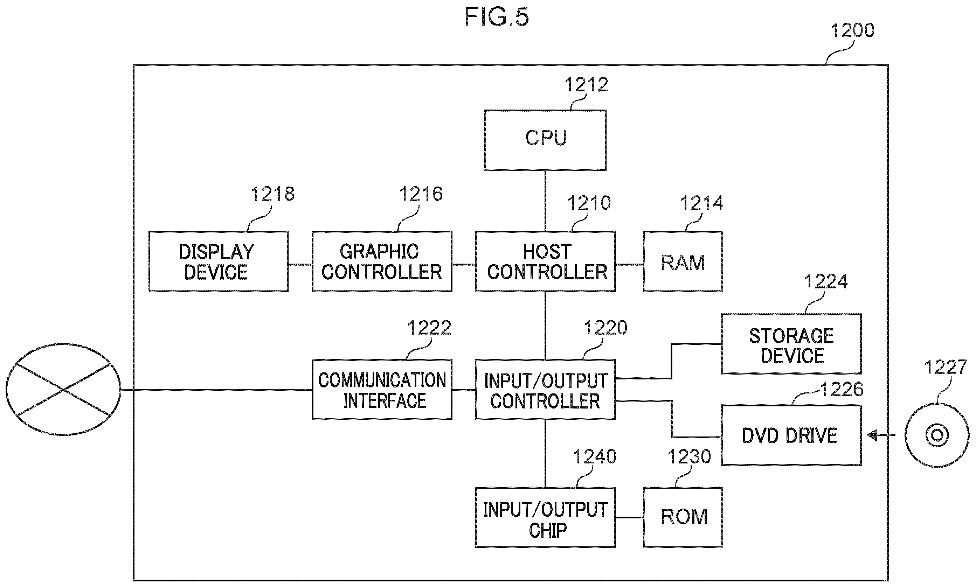

Fig. 5 schematically illustrates an example of a hardware configuration of a computer 1200 that functions as the robot 100 and the server 300 according to the first and second embodiments. The program installed in the computer 1200 can cause the computer 1200 to function as one or more "units" of the apparatus according to the present embodiment, or cause the computer 1200 to execute an operation associated with the apparatus according to the present embodiment or one or more "units" thereof, and/or cause the computer 1200 to execute a process according to the present embodiment or a stage of the process. Such programs may be executed by a CPU 1212 to cause the computer 1200 to perform certain operations associated with some or all of the blocks in the flowcharts and block diagrams described herein.

The computer 1200 according to the present embodiment includes a CPU 1212, a RAM 1214, and a graphic controller 1216 as an example of a hardware processor, which are mutually connected by a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs by loading and executing the programs stored in the ROM 1230 and the RAM 1214, thereby controlling each unit. The graphic controller 1216 obtains image data generated by the CPU 1212 in a frame buffer or the like provided in the RAM 1214 or the graphic controller itself, and causes the image data to be displayed on the display device 1218.

The communication interface 1222 communicates with other electronic devices via a network. The storage device 1224 stores programs and data used by the CPU 1212 in the computer 1200. The DVD drive 1226 reads a program or data from a DVD-ROM 1227 or the like and provides the program or data to the storage device 1224. The IC card drive reads the program and data from the IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 and provides cooperation between the programs and the various types of hardware resources described above. The device or method may be configured by implementing operation or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive 1226 (DVD-ROM 1227), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and write back the results to the RAM 1214. In addition, the CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches the specified condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in this embodiment may represent stages of a process in which an operation is performed or "units" of a device that are responsible for performing the operation. Certain stages and "units" may be implemented by dedicated circuit, programmable circuit provided with computer-readable instructions stored on a computer-readable storage medium, and/or a processor provided with computer-readable instructions stored on a computer-readable storage medium. The dedicated circuits may include digital and/or analog hardware circuits, and may include integrated circuits (ICs) and/or discrete circuits. The programmable circuit may include a reconfigurable hardware circuit, such as field programmable gate arrays (FPGAs) and programmable logic arrays (PLAs), which includes logical conjunction, logical disjunction, exclusive disjunction, NAND, NOR, and other logical operations, flip-flops, registers, and memory elements.

A computer-readable storage medium may include a non-transitory computer-readable recording medium, which is any tangible device capable of storing instructions for execution by a suitable device, such that a computer-readable storage medium having instructions stored therein includes a product including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk (registered trademark), a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk (registered trademark), a memory stick, an integrated circuit card, and the like.

The computer-readable instructions may include either source code or object code written in any combination of one or more programming languages, including assembler instructions, instruction-set-architecture (ISA) instructions, machine instructions, machinedependent instructions, microcode, firmware instructions, state-setting data, or an object oriented programming language such as Smalltalk, JAVA (registered trademark), C++, or the like, and conventional procedural programming languages, such as the "C" programming language or similar programming languages.

The computer-readable instructions may be provided for a processor of general purpose computer, special purpose computer, or other programmable data processing device, or a programmable circuit, either locally, over a local area network (LAN), or over a wide area network (WAN) such as the Internet, to cause the processor of general purpose computer, special purpose computer, or other programmable data processing device, or the programmable circuit to execute the computer-readable instructions to generate means for performing the operations specified in the flowcharts or block diagrams. Examples of the processor include a computer processor, a processing unit, a microprocessor, a digital signal processor, a controller, a microcontroller, and the like.

Although the disclosure has been described above with reference to the embodiments, the technical scope of the disclosure is not limited to the scope described in the embodiments. It is apparent to those skilled in the art that various modifications or improvements can be made to the above embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "First,", "Next,", and the like for convenience, it does not mean that it is essential to perform in this order.

The disclosure of Japanese Patent Application No. 2023-039085 filed on March 13, 2023, the disclosure of Japanese Patent Application No. 2023-084190 filed on May 22, 2023, the disclosure of Japanese Patent Application No. 2023-091150 filed on June 1, 2023, the disclosure of Japanese Patent Application No. 2023-122006 filed on July 26, 2023, the disclosure of Japanese Patent Application No. 2023-131607 filed on August 10, 2023, and the disclosure of Japanese Patent Application No. 2023-172245 filed on October 3, 2023 are incorporated herein by reference in their entirety.

## Claims

1. An action control system comprising:
a user state recognition unit that recognizes a user state including a behavior of a user;
an emotion determination unit that determines an emotion value indicating an emotion of the user on the basis of the user state; and
an action determination unit that determines an action corresponding to the behavior of the user as an action to be executed in a case where the emotion value is a positive value, and determines an action determined on the basis of a reaction rule in accordance with a behavior classification of the user as an action to be executed in a case where the emotion value is not a positive value.

2. The action control system according to claim 1, wherein
the action determination unit
determines an action corresponding to the behavior of the user as the action to be executed in a case where the emotion value is a positive value and is equal to or greater than a threshold, and
determines an action determined on the basis of a reaction rule in accordance with a behavior classification of the user as the action to be executed in a case where the emotion value is a positive value and is less than the threshold, or in a case where the emotion value is a negative value.

3. The action control system according to claim 1, further comprising a behavior recognition unit that recognizes the behavior classification of the user on the basis of the user state,
wherein in the reaction rule, an action for positively changing the emotion value of the user is defined for each behavior classification.

4. The action control system according to claim 1, wherein the action corresponding to the behavior of the user is an action that imitates the behavior of the user.

5. The action control system according to claim 1, further comprising an action control unit that performs control to record at least one of an image of the user and a voice of the user in a case where the emotion value is a positive value.

6. The action control system according to claim 5, wherein
when performing the control, the action control unit performs control to cause a robot provided with the action control system to approach the user.

7. The action control system according to claim 5 or 6, wherein
when performing the control, the action control unit performs at least one of control for causing a voice output device to output a voice and control for causing a light emitting device to emit light.

8. A program for causing a computer to function as the action control system according to any one of claims 1 to 6.

9. An action control system comprising:
a user state recognition unit that recognizes a user state including a behavior of a user;
an emotion determination unit that determines an emotion value indicating an emotion of the user on the basis of the user state; and
an action determination unit that determines an action corresponding to the behavior of the user as an action to be executed in a case where the emotion value is a positive value, determines an action determined on the basis of a reaction rule in accordance with a behavior classification of the user as an action to be executed in a case where the emotion value is not a positive value and an absolute value is less than a threshold, and determines an action of notifying a supervisor of the user of a status of the user as an action to be executed in a case where the emotion value is a negative value and the absolute value is equal to or greater than the threshold.

10. The action control system according to claim 9, wherein
in a case where the emotion value is a negative value and the absolute value is equal to or greater than the threshold, the action determination unit further determines an action in which the robot rushes to a place where the user is present.

11. The action control system according to claim 9, wherein
in a case where the emotion value is a negative value and the absolute value is equal to or greater than the threshold, the user state recognition unit records the status of the user using at least one of a microphone and a camera.

12. The action control system according to claim 11, wherein
the user state recognition unit records at least one of an utterance content of the user collected by the microphone and an image of the user captured by the camera as the status of the user.

13. The action control system according to claim 12, wherein
the user state recognition unit records a result of converting the utterance content of the user collected by the microphone into character information.

14. A program for causing a computer to function as the action control system according to any one of claims 9 to 13.

15. An action control system comprising:
a user state recognition unit that recognizes a user state including a behavior of a user;
an emotion determination unit that determines an emotion value indicating an emotion of the user on the basis of the user state and associates the emotion value with a position of the user; and
an action determination unit that determines an action corresponding to the emotion value and the position of the user.

16. The action control system according to claim 15, wherein the emotion determination unit performs emotion mapping that is processing of generating a distribution of the emotion values in a space where a plurality of the users are present, by associating positions of the plurality of users with the emotion values of the respective users.

17. The action control system according to claim 15, wherein the action determination unit determines an action in a case where an absolute value of the emotion value is equal to or greater than a threshold.

18. The action control system according to claim 15, further comprising a behavior recognition unit that recognizes a behavior classification of the user on the basis of the user state,
wherein the action determination unit determines an action on the basis of a reaction rule that determines an action according to the behavior classification of the user.

19. The action control system according to claim 18, wherein, in the reaction rule, an action for positively changing the emotion value of the user is defined for each of the behavior classifications.

20. The action control system according to claim 18, wherein, in the reaction rule, an action for solving a problem that has occurred in a space where the user is present is defined for each of the behavior classifications.

21. A program for causing a computer to function as the action control system according to any one of claims 15 to 20.

22. An action control system comprising:
a user state recognition unit that recognizes a user state including a behavior of a user;
an emotion determination unit that determines an emotion value indicating an emotion of the user on the basis of the user state; and
an action determination unit that continues a first action corresponding to the behavior of the user in a case where the emotion value for the first action is a positive value, and determines a second action different from the first action in a case where the emotion value is not a positive value.

23. The action control system according to claim 22, wherein
the emotion determination unit determines the emotion value for the first action continuously or at regular intervals, and
the action determination unit switches to the second action and changes an action content of the second action according to the emotion value in a case where the determined emotion value does not change or decreases.

24. The action control system according to claim 22, further comprising a first robot and a second robot,
wherein each of the first robot and the second robot includes the user state recognition unit, the emotion determination unit, and the action determination unit,
the emotion determination unit of the first robot transmits the emotion value determined for the user to the second robot, and
the action determination unit of the second robot determines one of the first action and the second action according to the emotion value received from the first robot.

25. The action control system according to claim 24, wherein
the first robot and the second robot are installed at different locations.

26. A program for causing a computer to function as the action control system according to any one of claims 22 to 25.

27. An action control system comprising:
a user state recognition unit that recognizes a user state including a behavior of a user;
an emotion determination unit that determines an emotion value indicating an emotion of the user on the basis of the user state;
an action determination unit that determines an action corresponding to the behavior of the user as an action to be executed in a case where the emotion value is a positive value, and determines an action determined on the basis of a reaction rule in accordance with a behavior classification of the user as an action to be executed in a case where the emotion value is not a positive value; and
a sharing unit that shares the emotion value,
wherein the action determination unit determines an action on the basis of an emotion value of at least one user shared via the sharing unit among emotion values of a plurality of users in a case where there are plural users.

28. The action control system according to claim 27, wherein
the action determination unit:
determines an action corresponding to the behavior of the user as the action to be executed in a case where the emotion value is a positive value and is equal to or greater than a threshold; and
determines an action determined on the basis of a reaction rule in accordance with a behavior classification of the user as the action to be executed in a case where the emotion value is a positive value and is less than the threshold, or in a case where the emotion value is a negative value.

29. The action control system according to claim 27, further comprising a behavior recognition unit that recognizes the behavior classification of the user on the basis of the user state,
wherein in the reaction rule, an action for positively changing the emotion value of the user is defined for each behavior classification.

30. The action control system according to claim 27, wherein the action corresponding to the behavior of the user is an action that imitates the behavior of the user.

31. A program for causing a computer to function as the action control system according to any one of claims 27 to 30.
